# EUROPEAN PATENT APPLICATION

(11) **EP 4 693 841 A1**
(43) Date of publication of application: **11.02.2026**
(21) Application number: 24306324.5
(22) Date of filing: 05.08.2024
(51) Int. Cl.: H02K 11/21, H02K 41/02, H02K 41/03, F16H 25/20

(54) **ACTUATOR ASSEMBLY**

(71) Applicant: Goodrich Actuation Systems SAS, 27950 Saint-Marcel (FR)
(72) Inventor: Fabre, Antoine, Saint-Marcel, Vernon 27950 (FR); Vanneuville, Olivier, Saint-Marcel, Vernon 27950 (FR)
(74) Representative: Casalonga

(57) **Abstract**

An actuator assembly (2) is provided which comprises: a linear actuator (4) comprising an actuator rod (8) and an actuator housing (6). The actuator rod (8) is configured to move axially relative to the actuator housing (6). The actuator assembly (2) also comprises a position sensor (30) comprising a first part and a second part, wherein the first part is axially fixed relative to the actuator housing (6), and wherein the second part is configured to move with the actuator rod (8). The actuator assembly (2) also comprises a retainer (100) configured to limit axial movement between the first part and the actuator housing (6) in the event that the first part becomes unfixed relative to the actuator housing (6).

## Description

### TECHNICAL FIELD

The present disclosure relates to actuator assemblies, such as actuator assemblies including one or more position sensors for sensing the position of a linear actuator. Such actuator assemblies may be used in a number of different fields including but not limited to aerospace applications.

### BACKGROUND

The present disclosure relates to actuator assemblies including one or more position sensors for sensing the position of a linear actuator to more accurately control the linear actuator, for example using a feedback control system.

In some applications such as, for example, in the aerospace industry, there is a need to provide such actuator assemblies which incorporate safety features such that a single failure in part of the actuator may not result in a catastrophic event.

### SUMMARY

According to a first aspect of this disclosure, there is provided an actuator assembly comprising:
a linear actuator comprising an actuator rod and an actuator housing,
wherein the actuator rod is configured to move axially relative to the actuator housing;
a position sensor comprising a first part and a second part,
wherein the first part is axially fixed relative to the actuator housing, and wherein the second part is configured to move with the actuator rod; and
a retainer configured to limit axial movement between the first part and the actuator housing in the event that the first part becomes unfixed relative to the actuator housing.

In any example of the disclosure, the retainer may comprise a first contact surface extending in a radial direction and configured to abut a first axial end of the first part.

In any example of the disclosure, the retainer may comprise a second contact surface extending in a radial direction and axially spaced from the first contact surface.

In any example of the disclosure, the second contact surface may be configured to abut a radial protrusion, wherein the radial protrusion may be fixed against axial movement relative to the actuator housing.

In any example of the disclosure, the actuator assembly may comprise a fixing connecting the first part to the actuator housing.

In any example of the disclosure, the fixing may connect a second axial end of the first part to the actuator housing.

In any example of the disclosure, the actuator assembly may comprise a plurality of position sensors, each position sensor may comprise a first part axially fixed relative to the actuator housing and a second part configured to move with the actuator rod.

In any example of the disclosure, the retainer may be configured to limit axial movement between the first part of each position sensor of the plurality of position sensors and the actuator housing in the event that the first part becomes unfixed relative to the actuator housing.

In any example of the disclosure, the retainer may comprise a support configured to receive the first part.

In any example of the disclosure, the support may be configured to extend between at least part of the first part and an outer wall of the actuator housing, so as to reduce movement and / or vibration of the retainer.

In any example of the disclosure, the retainer may be held against axial movement relative to the actuator housing by contact with a radial face formed by a step in an outer wall of the actuator housing.

In any example of the disclosure, the actuator housing may comprise a stepped portion forming a position sensor enclosure.

In any example of the disclosure, the retainer may comprise one or more guides for wires for connecting the position sensor to electronics.

In any example of the disclosure, the retainer may be made from a material chosen to limit variations in clearance between the retainer and the surrounding parts of the actuator assembly.

In any example of the disclosure, the retainer may be made from the same material as the actuator housing or the position sensor.

According to a further aspect of this disclosure, there is provided an aircraft comprising an actuator assembly as described in any of the above examples, wherein the actuator assembly is configured to control an actuator for positioning a component of the aircraft.

### BRIEF DESCRIPTION OF DRAWINGS

Certain examples of the disclosure will now be described by way of example only and with reference to the accompanying drawings in which:
Figure 1 is a cross sectional view of an actuator assembly according to an example of the disclosure;
Figure 2 is a cross sectional view of a position sensor of an actuator assembly according to an example of the disclosure;
Figure 3 is a perspective view of part of an actuator assembly according to an example of the disclosure looking in a first direction; and
Figure 4 is a perspective view of part of an actuator assembly according to an example of the disclosure looking in a second direction, approximately opposite to the first direction.

### DETAILED DESCRIPTION

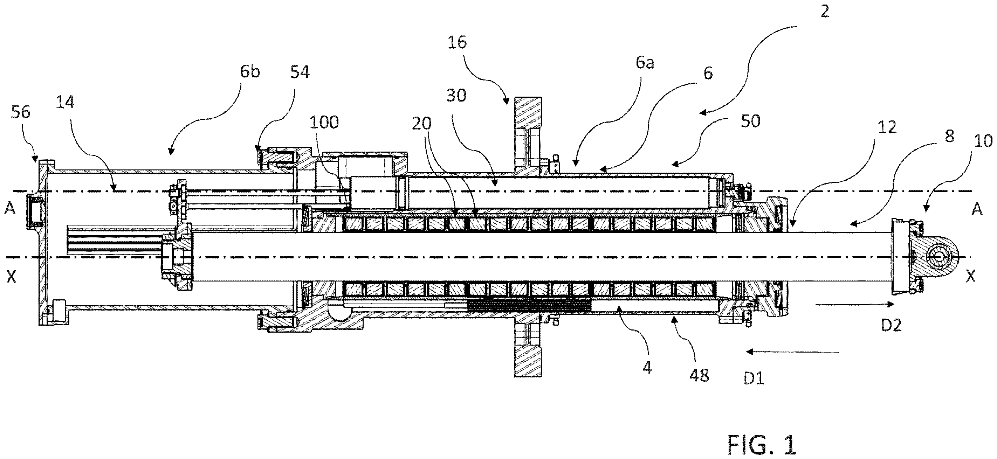

In any example, and referring to Figure 1, an actuator assembly 2 is provided. The actuator assembly comprises a linear actuator 4 which in turn comprises an actuator housing 6 and an actuator rod 8. The actuator housing 6 has a longitudinal axis X-X, along which the actuator rod 8 extends. The actuator rod 8 is mounted within the actuator housing 6 and is configured to move axially relative to the actuator housing, the actuator rod 8 being moveable in a first axial direction D1 inwardly and a second, opposite axial direction D2 relative to the actuator housing 6.

In some examples of the disclosure, a first end 10 of the actuator rod 8 may be configured to be attached to a component (not shown) to drive movement thereof. It will be understood that the linear actuator could be used in many different applications, including many different applications within the aerospace industry. In any example, the linear actuator 4 may be an electromechanical linear actuator. In any example, the linear actuator 4 may be configured to control an actuator for positioning a component of an aircraft, for example a helicopter rotor. In any example, the linear actuator may be configured to control the input position of one of three main rotor actuators in a helicopter. In such examples, the component to which the first end 10 of the actuator rod 8 may be attached may be a part of a main rotor actuator of a helicopter.

The actuator housing 6 has an opening 12 through which the actuator rod 8 extends. The first end 10 of the actuator rod 8 moves outwardly from the actuator housing 6 when the actuator rod 8 moves in the second direction D2. The first end 10 of the actuator rod 8 moves inwardly toward the actuator housing 6 when the actuator rod 8 moves in the first direction D1. In any example, the actuator rod 8 may be a shaft. In any example, the actuator rod 8 may be cylindrical, tubular or circular in cross section. In any example, the actuator rod 8 may be hollow or may be solid.

In any example, the actuator housing 6 forms a hollow body or a chamber 14 for receiving the actuator rod 8. In any example, the actuator housing 6 may be cuboid, cylindrical or take any other suitable form. In any example, the actuator housing 6 may comprise a flange 16 extending outwardly (for example radially outwardly) therefrom. In any example, the flange 16 may be configured to connect the actuator housing 6 to another structure (not shown), for example a part of a vehicle, such as for example the fuselage of a helicopter or another aircraft. In any example, the flange 16 may extend around an outer periphery of the actuator housing 6, for example being annular in shape.

It will be understood that the linear actuator 4 could take a variety of forms. In any example, the linear actuator 4 may be an electromechanical linear actuator. In some examples, the linear actuator 4 may include one or more magnets (not shown) which may be arranged inside the actuator rod 8. The linear actuator 4 may include one or more coils 20 which may be arranged axially adjacent to one another along the actuator rod 8, may extend around the actuator rod 8 and / or may be fixed relative to the actuator housing 6, in other words the actuator rod 8 may be axially moveable relative to the coils 20. In examples including the magnets and coils 20, the actuator rod 8 may be caused to move in the axial direction by energising the coils 20. It will be appreciated however that in other aspects of the disclosure, the linear actuator 4 could take other forms, including but not limited to an actuator comprising a motor and a ball screw (not shown).

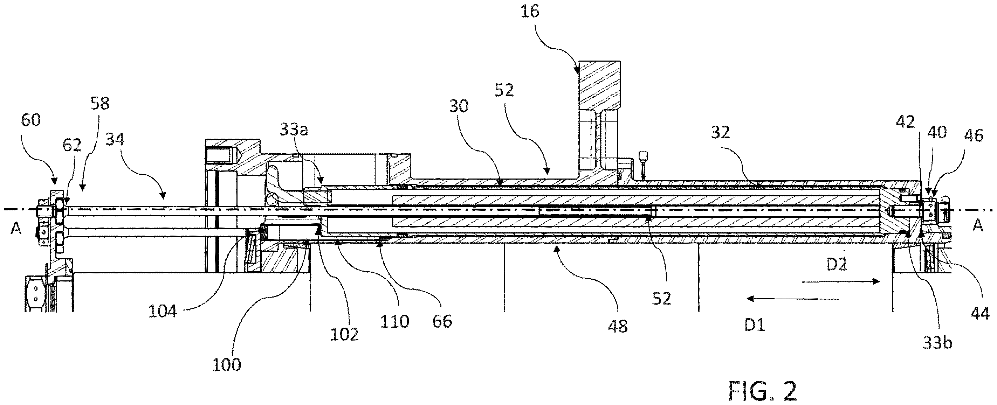

In any example of the disclosure, the actuator assembly 2 includes one or more position sensors 30. As seen more clearly in Figure 2, the or each position sensor 30 includes a first part (for example a sensor housing 32) and a second part (for example a sensor rod 34). In any example of the disclosure, the position sensor 30 may be a linear variable differential transformer (LVDT) although it will be appreciated that any other suitable type of position sensor could be used. In any example of the disclosure, the or each position sensor 30 may have a longitudinal axis A-A. In any example of the disclosure, the first part of the or each position sensor 30 is axially fixed relative to the actuator housing 6. The second part of the or each position sensor 30 is configured to move with the actuator rod 8, for example it may be fixed to the actuator rod 8. In the example shown, the sensor housing 32 of each position sensor 30 is fixed to the actuator housing 6. In the example shown, the sensor rod 34 of each position sensor 30 is fixed to the piston rod 8 and is configured to move with the piston rod 8 relative to the sensor housing 32.

In any example of the disclosure, the actuator housing 6 may be formed so as to fit around the or each position sensor 30. The actuator housing 6 may comprise a hollow body, a hollow cylindrical body in the example shown, having an outer wall 48 which may extend substantially parallel to the longitudinal axis X-X of the linear actuator 4 (and / or the longitudinal axis A-A of the or each position sensor 30) and which extends around at least part of the axial extent of the actuator rod 8, the actuator rod 8 being axially movable relative to the actuator housing 6. The actuator housing 6 may also comprise a stepped portion 50 forming a position sensor enclosure. The stepped portion 50 may include a radial wall 44 and a radially outer wall 52. The radial wall 44 may extend from the outer wall 48 to the radially outer wall 52. The radially outer wall 52 may extend along the outer circumference of the or each position sensor 30 and may extend parallel or substantially parallel to the outer wall 48.

In any example of the disclosure, the actuator assembly 2 may comprise any suitable number of position sensors 30, in some examples two position sensors or three position sensors, arranged substantially adjacent to and / or substantially parallel to one another. In any example of the disclosure, the or each position sensor 30 may be positioned on or over the linear actuator 4. In any example of the disclosure, the or each position sensor 30 may be positioned between the linear actuator 4 and the actuator housing 6, for example between the linear actuator 4 and the position sensor enclosure, for example between the linear actuator 4 and the radially outer wall 52 of the actuator housing 6. In any example of the disclosure, the or each position sensor 30 may be positioned inside the actuator housing 6, for example inside the stepped portion 50 forming the position sensor enclosure. In any example of the disclosure, the or each position sensor 30 may extend in the same direction or substantially the same direction as the linear actuator 4.

The longitudinal axis A-A of the or each position sensor 30 may extend parallel to or substantially parallel to the longitudinal axis X-X of the linear actuator 4. The longitudinal axis A-A of the or each position sensor 30 may be radially spaced from the longitudinal axis X-X of the linear actuator 4. The longitudinal axis A-A of each position sensor 30 may extend parallel to or substantially parallel to the longitudinal axis A-A of one or more other of the position sensors 30. The one or more position sensors 30 may be circumferentially arranged around the linear actuator and may be spaced from each other. The position sensors 30 may be axially aligned with each other.

In any example, one of the sensor housing 32 and the sensor rod 34 of the or each position sensor may be fixed to the actuator housing 6 by a fixing 40 which may be a pin, screw, rivet or similar. In any example, the or each sensor housing 32 (more generally, the first part) has a first axial end 33a and a second axial end 33b opposite the first axial end 33a. In any example, the sensor rod 34 of the or each position sensor may extend axially outwardly through an opening in the first axial end 33a of the sensor housing 32. In any example, the sensor rod 34 of the or each position sensor may extend axially outwardly through the opening in the first axial end 33a of the sensor housing 32 in the first direction D1.

In some examples and as shown in the example of the figures, the sensor housing 32 of the or each position sensor 30 may be fixed to the actuator housing 6 by a fixing 40. The fixing 40 may pass through an aperture 42 in the actuator housing 6. The fixing 40 may pass through an aperture 42 in a radial wall 44 of the actuator housing 6 and may comprise a head 46 which abuts against the radial wall 44 external to the actuator housing so as to limit or fix against axial movement of the position sensor housing 32. The fixing 40 may be fixed to the second axial end 33b of the sensor housing 32, for example being a screw connecting with a threaded bore (not shown) in the first end of the sensor housing 32. In any example of the disclosure, the fixing 40 may limit or fix against axial movement of the position sensor housing 32 in the first direction D1 and /or also in the second direction D2.

In any example of the disclosure, the radial wall 44 of the actuator housing 6 may limit or fix against axial movement of the position sensor housing 32 in the second direction D2. In any example of the disclosure, the radial wall 44 of the actuator housing 6 may abut against the second axial end 33b of the sensor housing 32.

In any example, the actuator housing 6 may be formed as a single part. In alternatives however, the actuator housing 6 may include a first portion 6a and a second portion 6b. The first portion 6a may include the outer wall 48, the radial wall 44 and the radially outer wall 52. The second portion 6b may have an open end which is joined to an open end of the first portion 6a by fixings 54 such as screws or rivets. The actuator rod 8 and the sensor rod 34 may move axially towards and / or away from a closed end 56 of the second portion 6b during actuation.

In any example, the other of the sensor housing 32 and the sensor rod 34 of the or each position sensor 30 may be fixed to the actuator rod 8 for axial movement therewith. In some examples and as shown, the sensor rod 34 of the or each position sensor 30 may be fixed to the actuator rod 8. In any example, a first end 57 of the sensor rod 34 may be mounted for relative axial movement in the sensor housing 32 and a second, opposite end of the sensor rod 34 may form a free end 58 thereof. In any example, a fixing flange 60 may be provided which extends radially outwardly from the actuator rod 8 and may be circumferentially aligned with the sensor rod 34 of the or each position sensor 30. The sensor rod 34 of the or each position sensor 30 may extend through the fixing flange 60 and be fixed thereto, for example by a respective nut 62 screwed onto the free end 58 of the respective sensor rod 34.

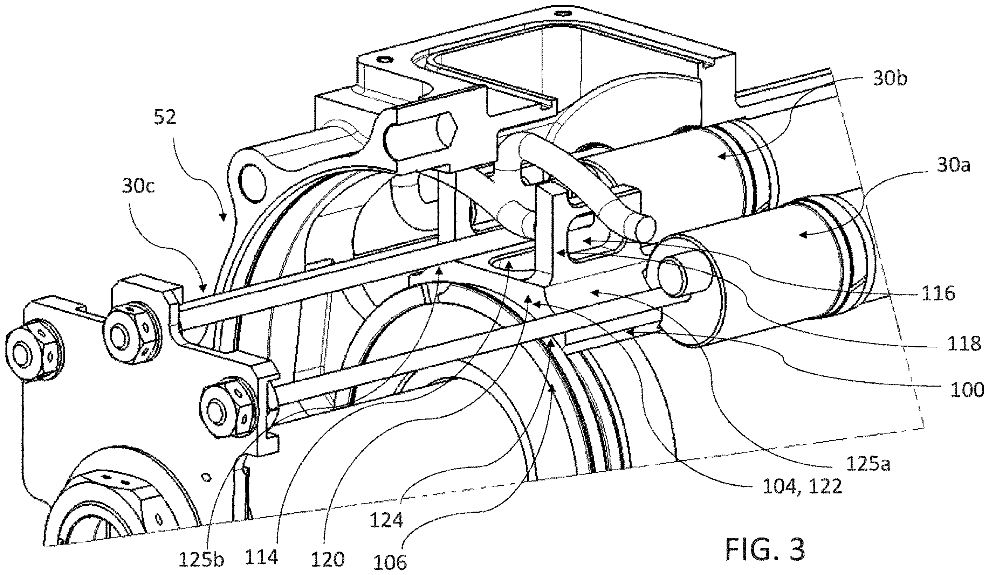

In the example shown and as seen for example in Figure 3, three position sensors (first position sensor 30a, second position sensor 30b, and third position sensor 30c which is not seen in full) may be provided. It will be understood that in arrangements in which two or more position sensors are provided, failure of one position sensor may not adversely impact on the function of the actuator assembly 2 as the remaining one or more position sensors may still function in the required manner to provide position data to a feedback system and / or control system.

In any example of the disclosure, the actuator assembly 2 comprises a retainer 100 configured to limit (or stop in some examples) axial movement between the first part of each position sensor and the actuator housing 6 in the event that the first part becomes unfixed relative to the actuator housing. In some examples, the retainer 100 may be configured to limit (or stop in some examples) axial movement between the or each sensor housing 32 and the actuator housing 6. In any example, the retainer 100 may limit or stop axial movement between the or each sensor housing 32 and the actuator housing 6 in the event that the or a position sensor 30 becomes unfixed from the actuator housing 6, for example due to a failure in the fixing 40.

In any example, the retainer 100 may be fixed relative to the actuator housing 6 against movement in an axial direction. In any example, the retainer 100 may include a first contact surface 102 extending in a radial direction and configured to contact the first axial end 33a of a sensor housing 32 when in situ in the actuator assembly 2. In any example, the retainer 100 may include a second contact surface 104 extending in a radial direction. The second contact surface 104 may be axially spaced from the first contact surface 102 and may be spaced from the first contact surface 102 in the first direction D1. The second contact surface 104 may be configured to contact a radial protrusion 106. In any example, the radial protrusion 106 may be fixed against axial movement relative to the actuator housing 6.

The radial protrusion could extend radially inwardly from the radially outer wall 52. In some examples and as shown in the drawings however, the radial protrusion 106 may extend radially outwardly from the outer wall 48 of the hollow cylindrical body of the actuator housing 6. This will enable installation of the position sensors 30 into the actuator housing 6 by inserting them into the actuator housing 6 in the second direction D2, following by installation of the retainer 100, again by inserting it into the actuator housing 6 in the second direction D2.

When in situ in the actuator assembly 2, the retainer 100 may be configured such that its first contact surface 102 abuts against the first axial end 33a of a sensor housing 32 and its second contact surface 104 abuts against the radial protrusion 106.

In any example of the disclosure, the radial protrusion 106 may be provided by a component which is separate from the actuator housing 6. This separate component may be attached to the hollow cylindrical body of the actuator housing 6, for example by a ring (not shown) extending into a groove (not shown) in the hollow cylindrical body of the actuator housing 6.

In any example of the disclosure, the retainer 100 may be configured such that a first contact surface 102 is provided for contacting each position sensor 30 in the actuator assembly. In the example shown in the drawings in which the actuator assembly includes three position sensors 30a, 30b and 30c, the retainer 100 may comprise three first contact surfaces (not all shown), each first contact surface 102 abutting against the first axial end 33a of a sensor housing 32 of a respective position sensor 30a, 30b and 30c. In other examples, not shown, it will be understood that a single first contact surface could be configured to come into contact with or abut against the first axial end 33a of the sensor housing 32 of each respective position sensor 30a, 30b and 30c.

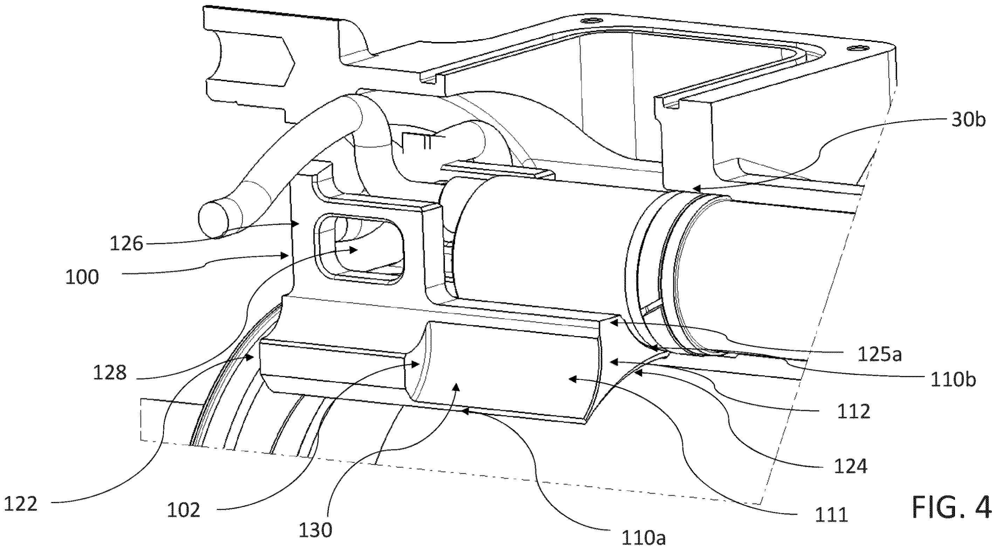

In any example of the disclosure and as seen for example in Figure 4, the retainer 100 may include a respective support 110 extending axially beyond the or each first contact surface 102 in the second direction D2. The or each support 110 may be configured to receive a respective sensor housing 32 and / or may be configured to extend between at least a portion of the respective sensor housing 32 and the outer wall 48 of the hollow cylindrical body of the actuator housing 6. The or each support 110 may have a surface 111 configured to conform to an outer surface of the at least part of a respective sensor housing 32. For example, the surface 111 may be curved. The or each support 110 may be configured to fill a clearance formed between the respective sensor housing 32 and the outer wall 48 of the hollow cylindrical body of the actuator housing 6 so as to reduce movement of the retainer 100 when subjected to vibration.

In any example of the disclosure, an axial end 112 of the or each retainer 100 may be held against axial movement relative to the actuator housing 6 in the second direction D2 by contact with a radial face 66 formed by a step in the outer wall 48 of the hollow cylindrical body of the actuator housing 6.

In any example of the disclosure, the retainer 100 may be formed from a metal, for example aluminium or steel, a composite or a polymer such as polytetrafluoroethylene (PTFE). At least in some examples, the retainer 100 may be made of the same material as the sensor housing 32 of the or each position sensor, or may be made of the same material as the actuator housing 6, in some examples aluminium. In other examples. The material of which the retainer 100 is made may be selected considering the differential thermal expansion between parts of the actuator assembly, in which for example the linear actuator 4 may be made from aluminium and / or the position sensor housing 32 may be made from stainless steel for example. The material of the retainer 100 may be chosen to limit variations in clearance between the retainer 100 and the surrounding parts of the actuator assembly 2, for example the actuator housing 6 and / or the radial protrusion 106 and / or the sensor housing 32, for example due to differentials in thermal expansion of the surrounding parts thereof.

In any example of the disclosure, the retainer 100 may be a solid body. In some applications however, such as for example in aerospace applications, it may be desirable to reduce the mass of the retainer 100 and / or to reduce the volume of material required to produce the retainer 100. In any example therefore, the retainer 100 may include grooves 114 and or apertures 116 formed therein to reduce the mass thereof and / or to reduce the solid volume thereof.

In any example of the disclosure, the retainer 100 may include one or more guides 118 for wires for connecting the position sensor to electronics. In any example, the guides 118 may be configured such that wires connecting the or each position sensor 30 to electronics such as a controller may be held in place by the guides 118 or may be tied or connected to the guides 118. This may reduce the possibility of the wires interfering with movement of the sensor rods 34 or other moving parts of the actuator assembly 2.

In any example and as shown in the drawings, the retainer 100 may comprise a body 120, the second contact surface 104 being provided by an end face 122 of the body 120. As seen for example in Figures 3 and 4, the body 120 may extend axially in the second direction D2 from the end face 122. The body may also extend circumferentially through a segment of a circle such that a radially inner surface 124 of the body 122 forms an arc which conforms with and sits over the outer wall 48 of the hollow cylindrical body of the actuator housing 6. The circumferential extent of the body 120 may be sized to receive two, three or any other suitable number of circumferentially adjacent position sensors 30. One or more radially extending ribs 125 extend radially outwardly from the body 122 and may extend along the full axial extent of the body 122. In any example, a rib 125 may be provided between each position sensor 30.

A guide 118 may be formed on a radially outer edge of each rib 125 and may be positioned proximate or adjacent the end face 122. The guide 118 may comprise a wall 126 extending both radially and axially from the rib 125, an opening 128 being formed in the wall 126.

On either side of the or each rib 125, a support 110 as described above may be formed, the support 110 being formed by a recess 130 in the body 122. The recess 130 may form the surface 111 as described above. The recess 130 may extend axially in the second direction D2 from the contact surface 102 to the axial end 112 of the retainer 100.

The view in Figure 4 shows part of an actuator assembly 2 according to an example of the disclosure but with part of the position sensor enclosure removed and with the nearest position sensor also removed to show features of the retainer 100 which would otherwise be hidden. Figure 3 shows roughly the same parts of the actuator assembly but from the opposite direction. It will be understood that many features are visible only in one of Figures 3 and 4.

In the example shown in the drawings, the retainer 100 includes three recesses 130, each forming a support 110 configured to receive a respective sensor housing 32. The sensor housing 32 of the central position sensor 30b in this example is received in a support 110b which extends between a first rib 125a and a second rib 125b. Although not clearly seen in the drawings, the support 110b is curved and is approximately semi-circular in cross section. A further support 110a is formed on the other circumferential side of the first rib 125a. The further support 110a is also curved but forms a shape following approximately a quarter of a circle in cross section. A still further support which is not visible in any of the drawings is formed on the other circumferential side of the second rib 125b. This further support is also curved but forms a shape following approximately a quarter of a circle in cross section.

It will be understood that by limiting or stopping axial movement of a position sensor 30 relative to the actuator housing 6 in the event of a failure of the fixing 40, the retainer 100 provides a failsafe mechanism such that a single failure would not lead to a catastrophic event. In contrast, if the retainer 100 were not present, failure of the fixing 40 would allow a position sensor 30 to move axially relative to the actuator housing 6. In some cases where only one position sensor 30 was provided, this would lead to errors in position sensor measurements such that feedback control of the actuator assembly 2 would not function correctly. In addition however, axial movement of a position sensor 30 could cause it to jam, potentially limiting the movement of the actuator rod 8. Even in cases where more than one position sensor 30 was provided this could lead to a catastrophic failure. It will be appreciated that by providing a retainer 100 according to the disclosure, the occurrence of such failures may be avoided or significantly reduced.

It will be understood that in any example of the disclosure, substantially parallel to may mean extending within -30 degrees and +30 degrees of parallel to, or within - 20 degrees and +20 degrees of parallel to, or within -10 degrees and +10 degrees of parallel to, or within -5 degrees and +5 degrees of parallel to. It will be understood that in any example of the disclosure, substantially perpendicular to may mean extending within -30 degrees and +30 degrees of perpendicular to, or within -20 degrees and +20 degrees of perpendicular to, or within -10 degrees and +10 degrees of perpendicular to, or within -5 degrees and +5 degrees of perpendicular to.

It will be understood that in any example of the disclosure, an axial direction is a direction parallel or substantially parallel to the longitudinal axis X-X of the linear actuator 4. It will be understood that in any example of the disclosure, a radial direction is a direction extending perpendicular or substantially perpendicular to the longitudinal axis X-X of the linear actuator 4.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. An actuator assembly comprising:
a linear actuator comprising an actuator rod and an actuator housing,
wherein the actuator rod is configured to move axially relative to the actuator housing;
a position sensor comprising a first part and a second part,
wherein the first part is axially fixed relative to the actuator housing,
and wherein the second part is configured to move with the actuator rod; and
a retainer configured to limit axial movement between the first part and the actuator housing in the event that the first part becomes unfixed relative to the actuator housing.

2. An actuator assembly as claimed in claim 1, wherein the retainer comprises a first contact surface extending in a radial direction and configured to abut a first axial end of the first part.

3. An actuator assembly as claimed in claim 2, wherein the retainer comprises a second contact surface extending in a radial direction and axially spaced from the first contact surface.

4. An actuator assembly as claimed in claim 3, wherein the second contact surface is configured to abut a radial protrusion, wherein the radial protrusion is fixed against axial movement relative to the actuator housing.

5. An actuator assembly as claimed in any preceding claim, comprising a fixing connecting the first part to the actuator housing.

6. An actuator assembly as claimed in claim 5, wherein the fixing connects a second axial end of the first part to the actuator housing.

7. An actuator assembly as claimed in any preceding claim, comprising a plurality of position sensors, each position sensor comprising a first part axially fixed relative to the actuator housing and a second part configured to move with the actuator rod.

8. An actuator assembly as claimed in claim 7, wherein the retainer is configured to limit axial movement between the first part of each position sensor of the plurality of position sensors and the actuator housing in the event that the first part becomes unfixed relative to the actuator housing.

9. An actuator assembly as claimed in any preceding claim, wherein the retainer comprises a support configured to receive the first part.

10. An actuator assembly as claimed in 9, wherein the support is configured to extend between at least part of the first part and an outer wall of the actuator housing, so as to reduce movement and / or vibration of the retainer.

11. An actuator assembly as claimed in any preceding claim, wherein the retainer is held against axial movement relative to the actuator housing by contact with a radial face formed by a step in an outer wall of the actuator housing.

12. An actuator assembly as claimed in any preceding claim, wherein the actuator housing comprises a stepped portion forming a position sensor enclosure.

13. An actuator assembly as claimed in any preceding claim, wherein the retainer comprises one or more guides for wires for connecting the position sensor to electronics.

14. An actuator assembly as claimed in any preceding claim, wherein the retainer is made from a material chosen to limit variations in clearance between the retainer and the surrounding parts of the actuator assembly, and / or wherein the retainer is made from the same material as the actuator housing or the position sensor.

15. An aircraft comprising an actuator assembly as claimed in any preceding claim, wherein the actuator assembly is configured to control an actuator for positioning a component of the aircraft.
